# EUROPEAN PATENT SPECIFICATION

(11) **EP 1 931 203 B1**
(45) Date of publication and mention of the grant of the patent: **04.03.2009**
(21) Application number: 06775969.6
(22) Date of filing: 04.09.2006
(51) Int. Cl.: A01N 43/653

(54) **METHOD OF REDUCING PHYTOTOXICITY ON PLANTS SUSCEPTIBLE TO TRIAZOLE FUNGICIDES**
VERFAHREN ZUR VERRINGERUNG DER PHYTOTOXIZITÄT AN PFLANZEN, DIE GEGENÜBER TRIAZOLFUNGIZIDEN EMPFINDLICH SIND
PROCÉDÉ DE RÉDUCTION DE LA PHYTOTOXICITÉ À L'ÉGARD DES PLANTES SENSIBLES AUX FONGICIDES TRIAZOLÉS

(30) Priority: 05.09.2005 EP 05388073
(43) Date of publication of application: 18.06.2008
(73) Proprietor: Cheminova A/S, 7620 Lemvig (DK)
(72) Inventor: PEDERSEN, Morten, DK-7620 Lemvig (DK)
(74) Representative: Rasmussen, Torben Ravn
(86) International application number: PCT/DK2006/000484
(87) International publication number: WO 2007/028388

(56) References cited:
- EP-A- 0 933 025
- WO-A-91/08665

## Description

The present invention relates to a method of protecting a plant from harmful fungi, the said plant being susceptible to triazole fungicides, by delivering to the plant or its seed in a fungicidal effective amount a formulation comprising a triazole fungicide and certain solvents. The method reduces or eliminates phytotoxic damages on the plant or its seed caused by the triazole fungicide even when applied at high rates.

### Background

Triazole fungicides, which exhibit their antifungal activity by inhibiting fungal ergosterol biosynthesis, are economically important agricultural chemicals as they are widely used on crops such as wheat, barley, legumes and orchard fruits and have protective, curative and eradicant properties.

However, triazole fungicides can on some plants cause phytotoxic damage to the plant itself when applied in amounts normally required to provide adequate control against fungicidal diseases. Symptoms of phytotoxic damage may be observed on the plant at emergence or during its growth or may be expressed at harvest and may be temporary or lasting. The symptoms may affect the whole plant or any part of the plant roots, shoots, leaves, flowers or fruits. Symptoms include subtle growth reduction and increased leaf chlorophyll break down causing chlorotic or necrotic markings. The phytotoxic effect of the triazole fungicides is especially pronounced when applied to a plant under stress conditions such as drought, or when formulated goods are applied in combination with crop oils (penetration accelerators) as is commonly done in practice.

It has been reported (Plant Pathology (1990), 39, p. 286-293) that certain triazole fungicides, especially tebuconazole, have a phytotoxic effect on cocoa trees. In the Brazilian publication, Circular Técnica, no. 1 (2004), published by the Brazilian Ministry of Agriculture, it is reported that applications of tebuconazole in soybean under adverse weather conditions (especially drought), can produce injury to the leaves, and that these symptoms are increased by addition of crop oils.

In United States patent no. US 5,156,832 it is suggested to combine cyproconazole with the fluorescein derivative Rose Bengal to reduce the phytotoxic threshold of cyproconazole. This has also been suggested in European patent application no. EP 297426-A2 with other triazole fungicides, e.g. tebuconazole, triadimenol and propiconazole.

In International patent publication no. WO 99/00013-A2, the problem of phytotoxic damages caused by triazole fungicides is addressed. The solution suggested is to entrap the triazole fungicide in polymeric matrixes in controlled release formulations. Such formulations are however not easily prepared on a commercial scale.

In European patent application no. EP 933025-A1 emulsifiable concentrate formulations (EC) are disclosed comprising a pesticide, a solvent system comprising esters of plant oils and a water-miscible polar aprotic cosolvent and an emulsifier system comprising a mixture of both anionic and nonionic surfactants.

In International application no. WO 91/08665-A1, stable emulsifiable concentrate formulations are disclosed comprising a pesticide, a solvent system comprising a mixture of a first component, preferably N-methylpyrrolidone, and a second component, preferably selected among C6-C14-alkylpyrrolidones, and optionally a diluent.

Despite the recent progress within the area there is still a need for new formulations comprising a triazole fungicide, which formulations have high stability and low phytotoxic activity.

### Description of the invention

In the method according to the invention, a plant or its seed is protected from harmful fungi, the said plant being susceptible to triazole fungicides, by delivering to the plant or its seed, a liquid formulation, preferably in diluted form, wherein the formulation in concentrated form comprises
a) one or more active ingredients selected among triazole fungicides
b) one or more solvents selected among esters of plant oils
c) one or more water-miscible polar aprotic co-solvents
d) one or more water-immiscible co-solvents
e) an emulsifier system comprising one or more surfactants
f) optionally, further auxiliaries
whereby phytotoxic damage on the plant caused by the triazole fungicide is reduced or eliminated when applied in a fungicidal effective amount.

It has surprisingly been found that triazole fungicides can be delivered to a plant or seed that are susceptible to triazole fungicides by incorporating the fungicide in a formulation according to the invention comprising certain solvents thereby reducing or eliminating the phytotoxicity of the fungicidal active chemical to the plant or its seed while maintaining a sufficient level of fungicidal activity.

In a preferred embodiment of the present invention a liquid formulation is delivered to a plants or its seed, wherein the formulation in concentrated form comprises:
a) 50-600 g/l, in particular 80-400 g/l, of one or more active ingredients selected among triazole fungicides
b) 100-600 g/l, in particular 150-450 g/l, one or more solvents selected among esters of plant oils
c) 50-400 g/l, in particular 100-300 g/l, one or more water-miscible polar aprotic co-solvents
d) 50-300 g/l, in particular 100-250 g/l, of one or more water-immiscible co-solvents
e) 10-200 g/l, in particular 50-150 g/l, of an emulsifier system comprising one or more surfactants
f) 0-300 g/l of further auxiliaries

As used herein, the term "triazole fungicide susceptible plant" means a plant that under glasshouse or field conditions suffers injury following the application of triazole fungicides at normal label concentrations that are recommended for disease control.

Included are plants that have been genetically engineered or otherwise modified to have resistance to, for instance, certain herbicides (e.g. glyphosate and imidazolinone herbicides), insects or certain fungal diseases.

Examples of plants that are susceptible to triazole fungicides include cereals (e.g. wheat, barley, rye, oats, rice, maize and sorghum) and broadleaf plants (e.g. cucumber, cotton, beans such as soybeans and common beans (*Phaseolus vulgaris),* tomatoes, potatoes, peanuts and coffee).

The method comprises delivering to the triazole fungicide susceptible plant or the seed from which the plant develops a liquid formulation in a fungicidal effective amount, i.e. in an amount sufficient to provide adequate disease control. An adequate amount cannot generally be defined, since it depends upon triazole compound(s) in the liquid formulation, the harmful fungi to be controlled, method of application, the type or size of plant or seed to be protected, and climate condition at time of application.

In one embodiment of the present invention the composition is delivered to the plant as a foliar application, i.e. as a spray. The plants may be protected from harmful fungi by applying treatments prior to, during, and/or after a fungal attack, i.e. as a prophylactic application, as a therapeutic application, or both. The doses usually applied are in the range of about 1 to 2000 grams of triazole fungicide active ingredient per hectare (g a.i./ha.). The plants may be protected at any growth stage and at multiple growth stages. For example, on soybean a treatment may be applied at any early growth stage, such as V1 or V2, at later growth stages, such as R1 to R3, and/or at any subsequent time that fungi has developed on the soybean plant.

The composition may also be applied to the soil from which the plant seed grows prior to, during, or after the sowing of the seed. When applied after the sowing of the seed, the composition should preferably be applied no later than the time at which the seed establishes a root system in the soil. For example, the composition may be applied on or about the time that the seed is planted, as an in-furrow application. When the composition is applied to the soil from which the seed grows, the composition may be directed into the soil mixing zone below the level of the top of a furrow in which the seed may be planted. In this way, the composition may be incorporated in the soil below the level of the seed, on the seed, above the seed, and to the side of the seed as the furrow is closed. The roots, when contacted with the soil containing the composition, absorb the composition, and then distribute the composition throughout the plant through know means. When applied to the soil from which the seed grows, the composition may be applied in an amount ranging from about 1 to about 1000 grams triazole fungicide per hectare of soil.

The composition may also be used as a seed treatment, i.e. by applying the composition to the plant seed as a coating or otherwise. The composition may be applied to the seed in a seed treatment at any time from the harvesting of the seed to the sowing of the seed. The composition may be applied using methods including but not limited to mixing in a container, mechanical application, tumbling, spraying, and immersion. For a general discussion of techniques used to apply fungicides to seeds, see "Seed Treatment," 2d ed., (1986), edited by K.A. Jeffs (chapter 9). The composition may be applied to the seed using spinning disk or spray applicators in rotating mixers or via seed augers. In their simplest form, the seed is treated in machinery similar to builders cement mixers. Alternatives include purpose-designed machinery that uniformly distributes chemical onto seed contained within a rotating mixing vessel. Such applications may be performed in batch or continuous flow processes. When applied to a seed, the composition may be applied in an amount ranging from about 1 to about 500 grams of triazole fungicide per 100 kilograms of seed.

In a preferred embodiment of the present invention, the liquid formulation is delivered to the plant as a foliar spray treatment as to provide an amount ranging from 10 to 1000 grams of triazole fungicide per hectare, more preferably from 50 to 800 g/ha and even more preferably between 90-500 g/ha.

Examples of commercially available triazole fungicides suitable as active ingredient (a) include bitertanol, bromuconazole, cyproconazole, diclobutrazole, diniconazole, epoxiconazole, etaconazole, fenbuconazole, fluquinconazole, flusilazole, flutriafol, hexaconazole, myclobutanil, penconazole, propiconazole, prothioconazole, tebuconazole, tetraconazole, triadimefon, triadimenol and triticonazole, whereby flutriafol and tebuconazole are particularly preferred.

The liquid formulations according to the invention are prepared in a conventional manner by mixing all ingredients, preferably under stirring, and optionally prepared under elevated temperatures to ease formation of a homogeneous composition.

The esters of plant oils (b) are preferably alkyl esters of fatty acids of plant oils, for example obtainable from medium chained fatty acids by esterification with alkanols, and include (C₁-C₂₀)-alkyl (C₅-C₂₂)-fatty acid esters. Preferred fatty acids of these plant oils have 5 to 20, in particular 6 to 18 carbon atoms. Such fatty acids are usually mixtures of acids with various chain lengths. Preferably methyl esters of plant oils are used, and more preferably mixtures of methylated plant oils wherein the main component (i.e. more than 50%) has a carbon chain length between 7-16, more preferably 8-14. Examples of methyl esters of plants oils are Stepan C-25 methyl ester or Stepan C-40 methyl ester both available from Stepan or Witconol 2301, Witconol 2307, Witconol 2308, Witconol 2309 all available from Witco Corporation or Edenor ME C6-C10, Edenor ME C12 98/100 both available from Cognis, as well as the Agnique ME series of products available from Cognis such as Agnique ME 890-G.

The water-miscible polar aprotic co-solvents (c) are preferably selected among N-methylpyrrolidone (NMP), dimethyl sulfoxide (DMSO), 2-propanol, tetrahydrofuran, propylene carbonate, gamma-butyrolactone, cyclohexanone, tetrahydrothiophene-1,1-dioxide, N-cyclohexyl-2-pyrrolidone, tetramethylurea, with NMP, DMSO and gamma-butyrolactone being most preferred.

The water-immiscible co-solvent(s) (d) is essential to incorporate in the formulation to prevent the triazole fungicide from crystallization when the formulation is diluted. Among preferred water-immiscible co-solvents are aromatic hydrocarbons (e.g. blends of aromatic hydrocarbons such as Solvesso 100 available from Exxon), ketones, esters, amides and alcohols. Aromatic hydrocarbons in particular are preferred. The fact that different solvents can work as co-solvent (d) may indicate that the co-solvent (d) works through various physicochemical and chemical mechanisms such as for instance increase of triazole fungicide solubility, triazole fungicide crystal inhibition and/or change of the triazole fungicide oil/water partition coefficient.

The ability of a solvent to dissolve a given substance, e.g. a triazole fungicide, may conveniently be evaluated by parameter consideration according to the so-called "Hansen system", which is described in "Hansen Solubility Parameters - A Users Handbook", published by CRC Press (2000). According to the Hansen system, a solvent or mixture of solvents may be described by three solubility parameters δd (dispersion parameter), δp (polarity parameter) and δh (hydrogen bonding parameter). Different solvents with regard to Hansen solubility parameters and molecular structures have been found to be particular useful as water-immiscible co-solvent (d) together with esters of plant oils, i.e., solvent (b). Water-immiscible co-solvents or mixtures of such solvents having Hansen solubility parameters in the following ranges are preferred: δd 14.3-17.9 MPa^{½}, δp 0.4-10.0 MPa^{½} and 5h 1.0-13.7 and more preferably δd 14.4-17.7 MPa^{½}, δp 2.0-8.0 MPa^{½} and δh 7.0-13.6 MPa^{½}.
Among especially preferred water immiscible co-solvents are C5-C10 alcohols, more preferably C5-C9 alcohols, even more preferably C6-C9 alcohols and in particular C8 alcohols. Examples of such alcohols include pentanol, hexanol, 2-ethyl butanol, heptanol, 2-ethylhexanol, octanol and 2-octanol. Octanol is especially preferred.

In the emulsifier system (e), the surfactant(s) may be chosen among such surface active agents belonging to the class of anionic surfactants, non-ionic surfactants cationic surfactants, zwitterionic surfactants, polymer surfactants, and mixtures thereof. In a preferred embodiment the emulsifier system comprises at least one anionic surfactant. In another preferred embodiment, the surfactants are chosen among anionic and non-ionic surfactants and mixtures thereof In a more preferred embodiment the emulsifier system comprises solely one or more anionic surfactants, and even more preferably two or more anionic surfactants. Examples of suitable anionic surfactants (e) include alkali, alkaline earth or ammonium salts of the fatty acids, such as potassium stearate, alkyl sulfates, alkyl ether sulfates, alkylsulfonates or iso-alkylsulfonates, alkylbenzenesulfonates such as sodium dodecylbenzenelsulfonate or calcium docecylbenzenesulfonate, alkylnaphthalenesulfonates, alkyl methyl ester sulfonates, acyl glutamates, alkylsulfosuccinates, sarcosinates such as sodium lauroyl sarcosinate, taurates or ethoxylated and phosphorylated styryl-substituted phenols e.g. tristyrylphenyl ether phosphate added with polyoxyethylene. Preferred are sodium-, and calciumdodecylbenzene sulfonate, eg. Phenylsulfonat CA available from Clariant, and tristyrylphenyl ether phosphate added with polyoxyethylene e.g. 2,4,6-tri-(1-phenylethyl)-phenol polyglycol ether phosphoric acid ester available from Clariant under the trade name Dispersogen LFH.
Examples of cationic surfactants include quaternary ammonium salts which contain, as substituents, at least one alkyl radical having 8 to 22 C atoms and, as further substituents, lower, non-halogenated or halogenated alkyl, benzyl or lower hydroxy alkyl radicals. The salts are preferably in the form of halides or alkyl sulfates.
Examples of nonionic surfactants include alkoxylated animal or vegetable fats and oils such as corn oil ethoxylates, castor oil ethoxylates, talo fat ethoxylates, glycerol esters such as glycerol monostearate, fatty alcohol alkoxylates and oxoalcohol alkoxylates, fatty acid alkoxylates such as oleic acid ethoxylates, alkylphenol alkoxylates such as isononylphenol ethoxylates, fatty amine alkoxylates, fatty acid amide alkoxylates, sugar surfactants such as sorbitan fatty acid esters (sorbitan monooleate, sorbitan tristearate), polyoxyethylene sorbitan fatty acid esters, alkyl polyglycosides, ethoxylated styryl-substituted phenols, N-alkylgluconamides, alkyhnethyl sulfoxides, alkyldiznethylphosphine oxides such as tetradecyldimethylphosphine oxide.
Examples of zwitterionic surfactants include alkylbetaines, alkylamidobetaines, amino-propionates, aminoglycinates, imidazolinium betaines and sulfobetaines. Examples of polymer surfactants include di-, tri- or multi-block polymers of the (AB)x, ABA and BAB type, such as polyethylene oxide block polypropylene oxide, polystyrene block polyethylene oxide, AB comb polymers such as polymethacrylate comb polyethylene oxide or polyacrylate comb polyethylene oxide.

Further optionally auxiliaries (f) which may be included in the concentrated formulation are water, pH-adjusters, thickeners, antifreeze agents, preservatives, antifoaming and defoamer agents, spreading agents, stickers, UV-protectants, stabilizers, and one or more additional fungicides. Such auxiliaries are generally known within the art of formulation chemistry, and although a specific ingredient is classified as falling within one category, it may well serve the purpose of any of the others.
The pH adjusters include both acids and bases of the organic or inorganic type. Suitable pH adjusters include organic acids and alkali metal compounds. The organic acids include those such as citric, malic, adipic, cinnamic, fumaric, lactic, maleic, succinic, and tartaric acid, and the mono-, di-, or tribasic salts of these acids are suitable organic acid salts. Suitable salts of these acids are the soluble or meltable salts and include those salts in which one or more acidic protons are replaced with a cation such as sodium, potassium, calcium, magnesium, and ammonium. Alkali metal compounds include hydroxides of alkali metals such as sodium hydroxide and potassium hydroxide, carbonates of alkali metals such as sodium carbonate and potassium carbonate, hydrogencarbonates of alkali metals such as sodium hydrogencarbonate and alkali metal phosphates such as sodium phosphate.
Thickeners and film-forming agents include starches, gums, casein and gelatine, polyvinyl pyrrolidones, polyethylene and polypropylene glycols, polyacrylates, polyacrylamides, polyethyleneimines, polyvinyl alcohols, polyvinyl acetates, and methyl-, hydroxyethyl- and hydroxypropylcelluloses and derivatives thereof Examples of the antifreezing agent include ethylene glycol, diethylene glycol, propylene glycol and the like.
Typical preservatives include methyl and propyl parahydroxybenzoate, 2-bromo-2-nitro-propane-1,3-diol, sodium benzoate, formaldehyde, glutaraldehyde, O-phenylphenol, benzisothiazolinones, 5-chloro-2-methyl-4-isothiazolin-3-one, pentachlorophenol, 2-4-dichlorobenzylalcohol and sorbic acid and derivatives thereof.
Preferred anti-foaming and defoamer agents are silicone based compounds e.g. polyalkylsiloxanes.
Examples of stabilizers include phthalate(s) such as diethylhexyl phthalate, ethylhexyl phthalate, dimethyl phthalate, diethyl phthalate, butylbenzyl phthalate, dibutyl phthalate, diisononyl phthalate, and dioctyl phthalate. Preferred are dimethyl phthalate, diethyl phthalate and diisononyl phthalate, and especially diethyl phthalate.
The optional additional fungicides can advantageously be included for example to broaden the spectrum of action or to prevent the build-up of resistance. Suitable examples of such additional fungicides are e.g 2-aminobutane; 8-hydroxyquinoline sulphate; 2-phenylphenol (OPP), aldi-morph, ampropylfos, anilazine, azoxystrobin, benalaxyl, benodanil, benomyl, binapacryl, biphenyl, blasticidin-S, bupirimate, buthiobate, calcium polysulphide, captafol, captan, carbendazim, carboxin, carpropamid, quinomethionate, chloroneb, chloropicrin, chlorothalonil, chlozolinate, cufraneb, cyazofamid, cymoxanil, cyprodinil, cyprofuram, dichlorophen, diclocymet, diclofluanid, diclomezin, dicloran, diethofencarb, diflumetorim, dimethirimol, dimethomorph, dinocap, diphenylamine, dipyrithion, ditalimfos, dithianon, dodine, drazoxolon, edifenphos, enestroburin, ethaboxam, ethirimol, etridiazole, famoxadone, fenamidone, fenarimol, fenfuram, fenhexamid, fenitropan, fenpiclonil, fenpropidin, fenpropimorph, fentin acetate, fentin hydroxide, ferbam, ferimzone, fluazinam, fludioxonil, flumorph, fluoromide, fluoxastrobin, flusulfamide, flutolanil, folpet, fosetyl-aluminium, fthalide, fuberidazole, furalaxyl, fumecyclox, guazatine, hexachlorobenzene, imazalil, iminoctadine, iprobenfos (IBP), iprodione, iprovalicarb, isoprothiolane, kasugamycin, copper preparations such as: copper hydroxide, copper naphthenate, copper oxychloride, copper sulphate, copper oxide, oxine-copper and Bordeaux mixture, mancopper, mancozeb, maneb, mepanipyrim, kresoxim-methyl, mepronil, metalaxyl, methasulfocarb, methfuroxam, metiram, metominostrobin, metrafenone, metsulfovax, myclobutanil, nickel dimethyldithiocarbamate, nitrothal-isopropyl, nuarimol, ofurace, oxadixyl, oxamocarb, oxycarboxin, pefurazoate, pencyuron, phosdiphen, picoxystrobin, pimaricin, piperalin, polyoxin, probenazole, prochloraz, procymidone, propamocarb, propineb, pyraclostrobin, pyrazophos, pyrifenox, pyrimethanil, pyroquilon, quinoxyfen, quintozene (PCNB), silthiofam, spiroxamine, sulphur and sulphur preparations, tecloftalam, tecnazene, thiabendazole, thicyofen, thifluzamide, thiophanate-methyl, thiram, tolclophos-methyl, tolylfluanid, triazoxide, trichlamide, tricyclazole, tridemorph, trifloxystrobin, triflumizole, triforine, validamycin, vinclozolin, zineb, ziram, zoxamide, and combinations thereof.

Common for all ingredients used according to the invention is that they be selected as not to cause any undesirable side effects when used in plant or seed protection, e.g. to induce phytotoxicity.

The concentrated liquid formulations according to the invention are stable for at least 24 months at 25°C and at least 3 months when stored at 40°C. Further, the formulations in diluted form, i.e. the spray liquid, remain free of crystal deposition as a minimum for several hours after dilution.

While concentrated formulations are preferred as commercially available goods, the end consumer uses, as a rule, dilute formulations. These formulations may be diluted to concentrations down to between 0.0001 and 4% of active ingredient (a.i.) by weight of total solution. In general the a.i. concentrations are between 0.001 and 3% by weight, preferably 0.005 to 2% by weight.

The formulations are effective especially against the phytopathogenic fungi belonging to the following classes: Ascomycetes (e.g. *Erysiphe, Venturia, Pyrenophora);* Basidiomycetes, e.g. rusts (e.g. *Puccinia* spp) and smuts *(Tilletia* spp and *Ustilago* spp); Deuteromycotina, (e.g. *Helminthosporium, Fusarium, Septoria,* and *Cercospora*.) The following important pathogens inter alia are controlled: *Tilletia caries, Drechslera teres, Fusarium nivale, Fusarium culmorum, Erysiphe graminis, Erysiphe cichoracearum, Sphaerotheca fuliginea, Podosphaera leucotricha, Uncinula necator, Puccinia graminis, Rhizoctonia solani, Ustilago tritici, Ustilago maydis, Helminthosporium gramineum, Helminthosporium otyzae, Venturia inaequalis, Septoria nodorum, Septoria triticii, Puccinia recondite, Puccinia hordei, Botrytis cinerea, Cercospora arachidicola, Pseudocercosporella herpotrichoides, Pyrenophora teres, Pyricularia oryzae, Hemileia vastatrix, Alternaria solani, Sclerotium rolfsii, Phakopsora pachyrhizi* and *Phakopsora meibomiae.*

The invention is illustrated by the following examples:

In the examples the following ingredients are mentioned with reference to their tradenames:
Agnique ME890-G, methyl ester of plant oils available from Cognis
Witconol 2309, methyl ester of plant oils available from Witco Corporation
Solvesso 100, blend of aromatic hydrocarbons, available from Exxon.
Edenor ME C6-C10, methyl ester of plant oils available from Cognis
Edenor ME C12 98/100, methyl ester of plant oils available from Cognis
Dispersogen LFH, phosphoric acid ester available from Clariant
Phenylsulfonat CA, sodium-dodecylbenzene sulphonate, available from Clariant.

### Example 1- preparation of formulation

Tebuconazole, N-methyl-2-pyrrolidone and Agnique ME890-G and octanol are mixed in the order specified in the table below. Stirring and heating to maximum 50°C are done in order to dissolve the tebuconazole. The emulsifiers, Dispersogen LFH and Phenylsulfonat CA, are added. Stirring and heating to maximum 50°C are continued until the formulation is homogenous. When still warm, i.e. 40-50°C, the formulation is filtered through Celatom filter aid. The product is a homogenous and transparent liquid. By mixing with water, spray liquids are prepared from the product thus obtained.

| **INGREDIENTS** | **g/1000 g** | **g/liter** |
|---|---|---|
| a) Tebuconazole | 260.6 | 253.3 |
| c) N-methyl-2-pyrrolidone | 154.5 | 150.1 |
| b) Agnique ME 890-G | 317.9 | 309.0 |
| d) Octanol | 167.0 | 162.3 |
| e) Dispersogen LFH | 50.00 | 48.6 |
| e) Phenylsulfonat CA | 50.00 | 48.6 |

### Example 2- preparation of formulation

Tebuconazole, N-methyl-2-pyrrolidone and Agnique ME890-G and octanol are mixed in the order specified in the table below. Stirring and heating to maximum 50°C are done in order to dissolve the tebuconazole. The emulsifiers, Dispersogen LFH and Phenylsulfonat CA, are added. Stirring and heating to maximum 50°C are continued until the formulation is homogenous. When still warm, i.e. 40-50°C, the formulation is filtered through Celatom filter aid. The product is a homogenous and transparent liquid. By mixing with water, spray liquids are prepared from the product thus obtained.

| **INGREDIENTS** | **g/1000 g** | **g/liter** |
|---|---|---|
| a) Tebuconazole | 213.7 | 204.5 |
| c) N-methyl-2-pyrrolidone | 157.9 | 151.1 |
| b) Agnique ME890-G | 349.6 | 334.6 |
| d) Octanol | 178.8 | 171.1 |
| e) Dispersogen LFH | 40.00 | 38.3 |
| e) Phenylsulfonat CA | 60.00 | 57.4 |

### Example 3 - preparation of formulation

Preparation of the product and mixing the finished product with water are done as described in example 1 and 2.

| **INGREDIENTS** | **g/1000 g** |
|---|---|
| a) Tebuconazole | 255.7 |
| c) N-methyl-2-pyrrolidone | 161.0 |
| b) Witconol 2309 | 316.6 |
| d) Octanol | 166.7 |
| e) Dispersogen LFH | 40.00 |
| e) Phenylsulfonat CA | 60.00 |

### Example 4 - preparation of formulation

Tebuconazole, N-methyl-2-pyrrolidone, Witconol 2309, Solvesso 100 and DL-lactate are mixed in the order specified in the table below. Stirring and heating to maximum 50°C are done in order to dissolve the tebuconazole. The emulsifiers, Dispersogen LFH and Phenylsulfonat CA, are added. Stirring and heating to maximum 50°C are continued until the formulation is homogenous. The product is a homogenous and transparent liquid. By mixing with water, spray liquids are prepared from the product thus obtained.

| **INGREDIENTS** | **g/1000 g** |
|---|---|
| a) Tebuconazole | 255.7 |
| c) N-methyl-2-pyrrolidone | 192.7 |
| b) Witconol 2309 | 198.3 |
| d) Solvesso 100 | 198.3 |
| e) Dispersogen LFH | 40.00 |
| e) Phenylsulfonat CA | 60.00 |
| f) DL-lactate | 55.00 |

### Example 5 - preparation of formulation

Preparation of the product and mixing of the finished product with water are done as described in example 4.

| **INGREDIENTS** | **g/1000 g** |
|---|---|
| a) Tebuconazole | 250.0 |
| c) N-methyl-2-pyrrolidone | 156.7 |
| b) Edenor ME C6-C10 | 190.0 |
| b) Edenor ME C12 98/100 | 126.6 |
| d) Octanol | 166.7 |
| e) Dispersogen LFH | 50.00 |
| e) Phenylsulfonat CA | 50.00 |
| f) Dem. water | 10.00 |

### Example 6 - preparation of formulation

Tebuconazole, gamma-butyrolactone, Agnique ME890-G and octanol are mixed in the order specified in the table below. Stirring and heating to maximum 50°C are done in order to dissolve the tebuconazole. Dispersogen LFH and Phenylsulfonat CA, are added. Stirring and heating to maximum 50°C are continued until the formulation is homogenous. When still warm, i.e. 40-50°C, the formulation is filtered through Celatom filter aid. The product is a homogenous and transparent liquid. By mixing with water, spray liquids are prepared from the product thus obtained.

| **INGREDIENTS** | **g/1000 g** |
|---|---|
| a) Tebuconazole | 263.3 |
| c) Gamma-butyrolactone | 157.2 |
| b) Agnique ME 890-G | 312.5 |
| d) Octanol | 167.0 |
| e) Dispersogen LFH | 50.00 |
| e) Phenylsulfonat CA | 50.00 |

### Example 7 - preparation of formulation

Tebuconazole, dimethyl sulfoxide, diethyl phthalate, Agnique ME890-G and octanol are mixed in the order specified in the table below. Stirring and heating to maximum 50°C are done in order to dissolve the tebuconazole. The emulsifiers, Dispersogen LFH and Phenylsulfonat CA, are added. Stirring and heating to maximum 50°C are continued until the formulation is homogenous. When still warm, i.e. 40-50°C, the formulation is filtered through Celatom filter aid to obtain a homogenous and transparent liquid. By mixing with water, spray liquids are prepared from the product thus obtained.

| **INGREDIENTS** | **g/1000 g** |
|---|---|
| a) Tebuconazole | 267.7 |
| c) Dimethyl sulfoxide | 127.5 |
| b) Agnique ME 890-G | 275.5 |
| d) Octanol | 141.8 |
| e) Dispersogen LFH | 50.00 |
| e) Phenylsulfonat CA | 50.00 |
| f) Diethyl phthalate | 87.5 |

### Example 8 - preparation of formulation

Flutriafol, N-methyl-2-pyrrolidone and Agnique ME890-G and octanol are mixed in the order specified in the table below. Stirring and heating to maximum 50°C are done in order to dissolve the flutriafol. Dispersogen LFH and Phenylsulfonat CA are added. Stirring and heating to maximum 50°C are continued until the formulation is homogenous. When still warm, i.e. 40-50°C, the formulation is filtered through Celatom filter aid. The liquid product is homogenous and transparent. By mixing with water, spray liquids are prepared from the product thus obtained.

| **INGREDIENTS** | **g/1000 g** | **g/liter** |
|---|---|---|
| a) Flutriafol | 110.1 | 105.4 |
| c) N-methyl-2-pyrrolidone | 172.6 | 165.2 |
| b) Agnique ME 890-G | 412.1 | 394.3 |
| d) Octanol | 206.0 | 197.1 |
| e) Dispersogen LFH | 39.68 | 37.97 |
| e) Phenylsulfonat CA | 59.52 | 56.96 |

### Example 9 - preparation of formulation

Tebuconazole, N-methyl-2-pyrrolidone and Agnique ME890-G and n-hexanol are mixed in the order specified in the table below. Stirring and heating to maximum 50°C are done in order to dissolve the tebuconazole. The emulsifiers, Dispersogen LFH and Phenylsulfonat CA, are added. Stirring and heating to maximum 50°C are continued until the formulation is homogenous. When still warm, i.e. 40-50°C, the formulation is filtered through Celatom filter aid. The product is a homogenous and transparent liquid. By mixing with water, spray liquids are prepared from the product thus obtained.

| **INGREDIENTS** | **g/1000 g** | **g/liter** |
|---|---|---|
| a) Tebuconazole | 267.7 | 260.2 |
| c) N-methyl-2-pyrrolidone | 152.7 | 148.4 |
| b) Agnique ME 890-G | 314.3 | 305.5 |
| d) n-Hexanol | 165.3 | 160.7 |
| e) Dispersogen LFH | 50.00 | 48.6 |
| e) Phenylsulfonat CA | 50.00 | 48.6 |

### Example 10 - comparison of phytotoxicity on soybean I

In field tests the following commercially available products comprising tebuconazole as active ingredient were applied in officially recommended doses on soybeans: Folicur 200 g/l EC from BayerCropSciences, Rival 250 g/l EC from Agripec, and a formulation composed as shown in example 2.

In one series of tests the products were applied on the soybeans together with an oil penetration enhancer. Oil penetration enhancers are often used to improve the efficacy of insecticides applied together with fungicides. The oil penetration enhancers are known to augment the phytotoxicity caused by triazole fungicides.

In other series of tests the neat fungicide formulations were applied.

In all series of tests, either with or without oil penetration enhancer, the range of phytotoxicity response, i.e. necrotic areas on the leaves, was identical. In all series the formulation produced according to example 2 gave much less phytotoxicity than the two commercial products did, i.e., Folicur 200 g/l EC and Rival 250 g/l EC.

### Example 11- comparison of phytotoxicity on soybean II

In two green house tests on soybeans, Folicur 200 g/l and 250 g/l EC were compared with formulations prepared according to example 1 and 2. In both tests the two Folicur products gave far more phytotoxicity, i.e., necrotic spots or necrotic areas on the leaves, than the formulations, prepared according to example 1 and 2, gave rise to.
The results of the test are given in the table below.

| Product and dose (g ai/ha) | Average % necrotic areas on soy bean leaves - each treatment tested on 4 plants | | | |
|---|---|---|---|---|
| No treatment (Control) | 0 | 0 | 0 | 0 |
| Folicur 250 g/l EC 600 g ai/ha | 25 | 20 | 25 | 15 |
| Folicur 250 g/l EC 300 g ai/ha | 10 | 5 | 20 | 15 |
| Folicur 200 g/l EC 600 g ai/ha | 0 | 15 | 15 | 5 |
| Folicur 200 g/l EC 300 g ai/ha | 0 | 5 | 5 | 0 |
| Product according to Example 1 600 g ai/ha | 0 | 0 | 0 | 0 |
| Product according to Example 1 300 g ai/ha | 0 | 0 | 0 | 0 |
| Product according to Example 2 600 g ai/ha | 0 | 0 | 0 | 0 |
| Product according to Example 2 300 g ai/ha | 0 | 0 | 0 | 0 |

### Example 12 - comparison of phytotoxicity on peanuts.

In a green house phytotoxicity test on peanut plants, formulations produced according to example 1 and 2 were compared with Folicur 250 and 200 g/l EC. The Folicur formulations gave more phytotoxicity on peanut plants than the formulations produced according to example 1 and 2 did. The results are tabulated below.

| Product and dose (g ai/ha) | Average % necrotic areas on peanut leaves - each treatment tested on 4 plants | | | |
|---|---|---|---|---|
| No treatment (Control) | 0 | 0 | 0 | 0 |
| Folicur 250 g/l EC 1200 g ai/ha | 30 | 30 | 30 | 30 |
| Folicur 250 g/l EC 600 g ai/ha | 10 | 5 | 15 | 15 |
| Folicur 250 g/l EC 300 g ai/ha | 3 | 3 | 25 | 3 |
| Folicur 200 g/l EC 1200 g ai/ha | 20 | 20 | 30 | 35 |
| Folicur 200 g/l EC 600 g ai/ha | 7 | 7 | 10 | 10 |
| Folicur 200 g/l EC 300 g ai/ha | 0 | 0 | 0 | 0 |
| Product according to Example 1 1200 g ai/ha | 5 | 5 | 5 | 0 |
| Product according to Example 1 600 g ai/ha | 0 | 0 | 0 | 3 |
| Product according to Example 1 300 g ai/ha | 0 | 0 | 0 | 3 |
| Product according to Example 2 1200 g ai/ha | 0 | 0 | 0 | 0 |
| Product according to Example 2 600 g ai/ha | 0 | 0 | 0 | 0 |
| Product according to Example 2 300 g ai/ha | 0 | 0 | 0 | 0 |

### Example 13 - comparison of phytotoxicity on cucumber, cotton and common beans

In several green house tests Folicur 250 g/l and 200 g/l EC were compared with formulations prepared according to example 1 and 2. In some tests the plants were grown under stressful dry conditions.

The Folicur EC formulations gave much more phytotoxicity than the formulations prepared according to example 1 and 2, whether stressful dry conditions were applied or not.

Some of the phytotoxicity test results on cucumber, cotton and beans are tabulated below.

| Product and dose (g ai/ha) | Average % necrotic areas on cucumber leaves - each treatment tested on 5 plants | | | | |
|---|---|---|---|---|---|
| No treatment (Control) | 0 | 0 | 0 | 0 | 0 |
| Folicur 250 g/l EC 300 g ai/ha | 10 | 2 | 20 | 5 | 40 |
| Folicur 200 g/l EC 300 g ai/ha | 5 | 2 | 1 | 30 | 50 |
| Product according to Example 1 300 g ai/ha | 1 | 0 | 0 | 0 | 0 |
| Product ac- cording to Example 2 300 g ai/ha | 0 | 0 | 0 | 0 | 0 |

| Product and dose (g ai/ha) | Average % necrotic areas on cotton leaves - each treatment tested on 5 plants | | | | |
|---|---|---|---|---|---|
| No treatment (Control) | 0 | 0 | 0 | 0 | 0 |
| Folicur 250 g/l EC 300 g ai/ha | 40 | 20 | 25 | 5 | 20 |
| Folicur 200 g/l EC 300 g ai/ha | 20 | 3 | 1 | 25 | 20 |
| Product according to Example 1 300 g ai/ha | 0 | 0 | 0 | 0 | 0 |
| Product according to Example 2 300 g ai/ha | 0 | 0 | 0 | 0 | 0 |

| Product and dose (g ai/ha) | Average % necrotic areas on common bean leaves - each treatment tested on 4 plants | | | |
|---|---|---|---|---|
| No treatment (Control) | 0 | 0 | 0 | 0 |
| Folicur 250 g/l EC 600 g ai/ha | 40 | 50 | 40 | 60 |
| Folicur 200 g/l EC 600 g ai/ha | 80 | 35 | 35 | 50 |
| Product according to Example 1 600 g ai/ha | 0 | 0 | 0 | 0 |
| Product according to Example 2 600 g ai/ha | 0 | 0 | 0 | 0 |

### Example 14 - comparison of phytotoxicity on barley, wheat and oat

In several green house phytotoxcity tests Folicur 250 g/l and 200 g/l EC were compared with formulations produced according to example 1 and 2. The Folicur formulations gave more phytotoxicity on wheat, barley and oat than the formulations produced according to example 1 and 2. Some of the results are tabulated below.

| Product and dose (g ai/ha) | Average % necrotic areas on wheat leaves - each treatment tested on 5 plants | | | | |
|---|---|---|---|---|---|
| No treatment (Control) | 0 | 0 | 0 | 0 | 0 |
| Folicur 250 g/l EC 300 g ai/ha | 5 | 5 | 15 | 10 | 5 |
| Folicur 200 g/l EC 300 g ai/ha | 5 | 15 | 5 | 10 | 5 |
| Product according to Example 1 300 g ai/ha | 0 | 0 | 0 | 0 | 0 |
| Product according to Example 2 300 g ai/ha | 1 | 1 | 1 | 3 | 1 |

| Product and dose (g ai/ha) | Average % necrotic areas on barley leaves - each treatment tested on 5 plants | | | | |
|---|---|---|---|---|---|
| No treatment (Control) | 0 | 0 | 0 | 0 | 0 |
| Folicur 250 g/l EC 1200 g ai/ha | 10 | 10 | 5 | 10 | 10 |
| Product according to Example 1 1200 g ai/ha | 0 | 0 | 0 | 5 | 0 |

### Example 15 - comparison of phytotoxicity on tomatoes

In a green house phytotoxicity test on tomatoes, formulations produced according to example 1 and 2 were compared with Folicur 250 and 200 g/l EC. The Folicur formulations gave much more phytotoxicity on tomatoes than the formulations produced according to example 1 and 2 did. The results are tabulated below.

| Product and dose (g ai/ha) | Average % necrotic areas on tomato leaves - each treatment tested on 4 plants | | | |
|---|---|---|---|---|
| No treatment (Control) | 0 | 0 | 0 | 0 |
| Folicur 250 g/l EC 1200 g ai/ha | 75 | 75 | 70 | 75 |
| Folicur 250 g/l EC 600 g ai/ha | 30 | 30 | 30 | 40 |
| Folicur 250 g/l EC 300 g ai/ha | 7 | 7 | 3 | 7 |
| Folicur 200 g/l EC 1200 g ai/ha | 75 | 60 | 40 | 60 |
| Folicur 200 g/l EC 600 g ai/ha | 25 | 7 | 7 | 7 |
| Folicur 200 g/l EC 300 g ai/ha | 0 | 0 | 0 | 0 |
| Product according to Example 1 1200 g ai/ha | 0 | 0 | 0 | 0 |
| Product according to Example 1 600 g ai/ha | 0 | 0 | 0 | 0 |
| Product according to Example 1 300 g ai/ha | 0 | 0 | 0 | 0 |
| Product according to Example 2 1200 g ai/ha | 0 | 0 | 0 | 0 |
| Product according to Example 2 600 g ai/ha | 0 | 0 | 0 | 0 |
| Product according to Example 2 300 g ai/ha | 0 | 0 | 0 | 0 |

### Example 16 - comparison of phytotoxicity on coffee plants

In a green house phytotoxicity test on coffee plants, a formulation produced according to example 1 was compared with Folicur 250 g/l EC. According to the table below, the formulation produced as described in example 1 gave much less phytotoxicity on coffee plants than the Folicur 250 g/l EC did.

| Product and dose (g ai/ha) | Average % necrotic areas on coffee leaves - each treatment tested on 4 plants | | | |
|---|---|---|---|---|
| No treatment (Control) | 0 | 0 | 0 | 0 |
| Folicur 250 g/l EC 1200 g ai/ha | 30 | 30 | 30 | 20 |
| Folicur 250 g/l EC 600 g ai/ha | 15 | 5 | 10 | 5 |
| Folicur 250 g/l EC 300 g ai/ha | 3 | 3 | 0 | 0 |
| Product according to Example 1 1200 g ai/ha | 0 | 1 | 0 | 0 |
| Product according to Example 1 600 g ai/ha | 0 | 0 | 1 | 0 |
| Product according to Example 1 300 g ai/ha | 0 | 0 | 0 | 0 |

### Example 17 - preparation of formulation (comparative)

A formulation was prepared as outlined in example 1, but without a water-immiscible co-solvent, with the ingredients specified in the table below.

| **INGREDIENTS** | **g/1000 g** | **g/liter** |
|---|---|---|
| a) Tebuconazole | 260.6 | 249.4 |
| c) N-methyl-2-pyrrolidone | 154.5 | 147.8 |
| b) Agnique ME 890-G | 484.9 | 464.0 |
| e) Dispersogen LFH | 50.00 | 47.85 |
| e) Phenylsulfonat CA | 50.00 | 47.85 |

The composition gave an unacceptable degree of tebuconazole crystallization after dilution to spraying concentration. The crystals gave rise to filter and nozzle blockage in the spraying equipment.

### Example 18 - preparation of formulation (comparative)

A formulation was prepared as outlined in example 1, but without an ester of a plant oil, with the ingredients specified in the table below.

| **INGREDIENTS** | **g/1000 g** | **g/liter** |
|---|---|---|
| a) Tebuconazole | 260.6 | 253.3 |
| c) N-methyl-2-pyrrolidone | 154.5 | 150.1 |
| d) Octanol | 484.9 | 464.0 |
| e) Dispersogen LFH | 50.00 | 48.6 |
| e) Phenylsulfonat CA | 50.00 | 48.6 |

The composition gave an unacceptable degree of tebuconazole crystallization after dilution to spraying concentration. The crystals gave rise to filter and nozzle blockage in the spraying equipment.

## Claims

1. A method of protecting a plant or its seed from harmful fungi, the said plant being susceptible to triazole fungicides, comprising delivering to the plant or its seed, a liquid formulation, preferably in diluted form, wherein the formulation in concentrated form comprises
a) one or more active ingredients selected among triazole fungicides
b) one or more solvents selected among esters of plant oils
c) one or more water-miscible polar aprotic co-solvents
d) one or more water-immiscible co-solvents
e) an emulsifier system comprising one or more surfactants
f) optionally further auxiliaries
whereby phytotoxic damage on the plant caused by the triazole fungicide is reduced or eliminated when applied in a fungicidal effective amount.

2. The method according to claim 1 wherein the formulation comprises
a) 50-600 g/l of one or more active ingredients selected among triazole fungicides
b) 100-600 g/l of one or more solvents selected among esters of plant oils
c) 50-400 g/l of one or more water-miscible polar aprotic co-solvents
d) 50-300 g/l of one or more water-immiscible co-solvents
e) 10-200 g/l of an emulsifier system comprising one or more surfactants
f) 0-300 g/l of further auxiliaries

3. The method according to claim 2, wherein the formulation comprises
a) 80-400 g/l of one or more active ingredients selected among triazole fungicides
b) 150-450 g/l one or more solvents selected among esters of plant oils
c) 100-300 g/l, one or more water-miscible polar aprotic co-solvents
d) 100-250 g/l, of one or more water-immiscible co-solvents
e) 50-150 g/l of an emulsifier system comprising one or more surfactants
f) 0-300 g/l of further auxiliaries

4. The method according to any of the claims 1 to 3, wherein the component b) is selected among alkyl esters of fatty acids of plant oils.

5. The method according to claim 4, wherein the component b) is selected among methyl esters of fatty acids of plant oils.

6. The method according to any of the claims 1 to 5, wherein the component c) is selected among N-methylpyrrolidone, dimethyl sulfoxide, 2-propanol, tetrahydrofuran, propylene carbonate, gamma-butyrolactone, cyclohexanone, tetrahydrothiophene-1,1-dioxide, N-cyclohexyl-2-pyrrolidone and tetramethylurea.

7. The method according to claim any of the claims 1 to 6, wherein the component d) is selected among aromatic hydrocarbons, ketones, esters, amides and alcohols.

8. The method according to claim 7, wherein the component d) is selected among aromatic hydrocarbons.

9. The method according to claim 7, wherein the component d) is selected among solvents or mixture of solvents having Hansen solubility parameters in the ranges δd 14.3-17.9 MPa^{½}, δp 0.4-10.0 MPa^{½} and δh 1.0-13.7 MPa^{½}.

10. The method according to claim 9, wherein the component d) is selected among solvents or mixture of solvents having Hansen solubility parameters in the ranges δd 14.4-17.7 MPa^{½}, δp 2.0-8.0 MPa^{½} and δh 7.0-13.6 MPa^{½}.

11. The method according to claim 10, wherein the component d) is selected among C5-C10 alcohols.

12. The method according to claim 11 wherein the component d) is selected among C5-C9 alcohols.

13. The method according to claim 12 wherein the component d) is selected among C6-C9 alcohols.

14. The method according to claim 13, wherein the component d) is octanol.

15. The method according to any of the claims 1 to 14, wherein the component e) is selected among anionic surfactants, non-ionic surfactants, cationic surfactants, zwitterionic surfactants, polymer surfactants, and mixtures thereof.

16. The method according to claim 15, wherein the component e) is selected among anionic surfactants, non-ionic surfactants, and mixtures thereof.

17. The method according to claim 16, wherein the component e) is selected among anionic surfactants.

18. The method according to any of the claims 1 to 17, wherein the triazole fungicide is selected among bitertanol, bromuconazole, cyproconazole, diclobutrazole, diniconazole, epoxiconazole, etaconazole, fenbuconazole, fluquinconazole, flusilazole, flutriafol, hexaconazole, myclobutanil, penconazole, propiconazole, prothioconazole, tebuconazole, tetraconazole, triadimefon, triadimenol and triticonazole.

19. The method according to claim 18, wherein the triazole fungicide is selected among flutriafol and tebuconazole.

20. The method according to claim any of the claims 1 to 19, wherein the plant or the seed from which the plant develops is either a cereal or a broadleaf plant.

21. The method according to claim 20, wherein the plant or the seed from which the plant develops is selected from wheat, barley, rye, cucumber, cotton, soybeans, common beans, tomatoes, potatoes, peanuts or coffee.

22. The method according to any of the claims 1 to 21, wherein the liquid formulation is delivered as a spray treatment, a seed treatment or a soil treatment.

23. The method according to claim 22, wherein the liquid formulation is delivered as a spray treatment.

24. The method according to claim 23, wherein the liquid formulation is delivered in an amount as to provide 1 to 2000 grams of triazole fungicide per hectare.

25. The method according to claim 24, wherein the liquid formulation is delivered in an amount as to provide 10 to 1000 grams of triazole fungicide per hectare.

## Patentansprüche

1. Verfahren zum Schutz einer Pflanze oder ihrer Samen vor schädlichen Pilzen, wobei diese Pflanze gegenüber Triazol-Fungiziden empfindlich ist, umfassend die Verabreichung einer flüssigen Formulierung, vorzugsweise in verdünnter Form, an die Pflanze oder ihre Samen, wobei die Formulierung in konzentrierter Form umfasst
a.) ein oder mehrere aktive Inhaltsstoffe ausgewählt unter Triazol-Fungiziden
b.) ein oder mehrere Lösungsmittel ausgewählt unter Estern von Pflanzenölen
c.) ein oder mehrere wassermischbare polare aprotische Co-Lösungsmittel
d.) ein oder mehrere nicht mit wassermischbare Co-Lösungsmittel
e.) ein Emulgatorsystem mit einem oder mehreren Tensiden
f.) optional weitere Hilfsstoffe
wobei der phytotoxische Schaden an der Pflanze, der durch das Triazol-Fungizid verursacht wird, reduziert oder eliminiert wird, wenn in einer fungizideffektiven Menge angewandt wird.

2. Verfahren gemäß Anspruch 1, wobei die Formulierung umfasst
a.) 50-600 g/l eines oder mehrerer aktiver Inhaltsstoffe, ausgewählt unter Triazol-Fungiziden
b.) 100-600 g/l eines oder mehrerer Lösungsmittel, ausgewählt unter Estern von Pflanzenölen
c.) 50-400 g/l eines oder mehrerer wassermischbarer, polarer aprotischer Co-Lösungsmittel
d.) 50-300 g/l eines oder mehrerer mit Wasser nichtmischbarer Co-Lösungsmittel
e.) 10-200 g/l eines Emulgatorsystems mit einem oder mehreren Tensiden
f.) 0-300 g/l weiterer Hilfsstoffe

3. Verfahren gemäß Anspruch 2, wobei die Formulierung umfasst
a.) 80-400 g/l eines oder mehrerer aktiver Inhaltsstoffe ausgewählt unter Triazol-Fungiziden
b.) 150-450 g/l eines oder mehrerer Lösungsmittel, ausgewählt unter Estern von Pflanzenölen
c.) 100-300 g/l eines oder mehrerer wassermischbarer polarer aprotischer Co-Lösungsmitteln
d.) 100-250 g/l eines oder mehrerer mit Wasser nichtmischbarer Co-Lösungsmittel
e.) 50-150 g/l eines Emulgatorsystems mit einem oder mehreren Tensiden
f.) 0-300 g/l weiterer Hilfsstoffe.

4. Verfahren gemäß irgendeinem der Ansprüche 1 bis 3, wobei die Komponente b.) ausgewählt wird unter Alkyl-Estern von Fettsäuren von Pflanzenölen.

5. Verfahren gemäß Anspruch 4, wobei die Komponente b.) ausgewählt wird unter Methyl-Estern von Fettsäuren von Pflanzenölen.

6. Verfahren gemäß irgendeinem der Ansprüche 1 bis 5, wobei die Komponente c.) ausgewählt wird unter N-Methylpyrrolidon, Dimethylsulfoxid, 2-Propanol, Tetrahydrofuran, Propylencarbonat, Gamma-Butyrolacton, Cyclohexanon, Tetrahydrothiophen-1, 1-dioxid, N-Cyclohexyl-2-pyrrolidon und Tetramethylharnstoff.

7. Verfahren gemäß irgendeinem der Ansprüche 1 bis 6, wobei die Komponente d.) ausgewählt wird unter aromatischen Kohlenwasserstoffen, Ketonen, Estern, Amiden und Alkoholen.

8. Verfahren gemäß Anspruch 7, wobei die Komponente d.) ausgewählt wird unter aromatischen Kohlenwasserstoffen.

9. Verfahren gemäß Anspruch 7, wobei die Komponente d.) ausgewählt wird unter Lösungsmitteln oder Mischungen von Lösungsmittel mit Hansen Löslichkeitsparametern im Bereich δd 14,3 - 17.9 MPa^{½}, δp 0,4 - 10.0 MPa^{½} und δh 1.0 - 13.7 MPa^{½}.

10. Verfahren gemäß Anspruch 9, wobei die Komponente d.) ausgewählt wird unter Lösungsmitteln oder Mischungen von Lösungsmittel mit Hansen Löslichkeitsparametern im Bereich δd 14.4 - 17.7 MPa^{½}, δp 2.0 - 8.0 MPa^{½} und δh 7.0 - 13.6 MPa^{½}.

11. Verfahren gemäß Anspruch 10, wobei die Komponente d.) ausgewählt wird unter C5-C10 Alkoholen.

12. Verfahren gemäß Anspruch 11, wobei die Komponente d.) ausgewählt wird unter C5-C9 Alkoholen.

13. Verfahren gemäß Anspruch 12, wobei die Komponente d.) ausgewählt wird unter C6-C9 Alkoholen.

14. Verfahren gemäß Anspruch 13, wobei die Komponente d.) Oktanol ist.

15. Verfahren gemäß irgendeinem der Ansprüche 1 bis 14, wobei die Komponente e.) ausgewählt ist unter anionischen Tensiden, nicht-ionischen Tensiden, kationischen Tensiden, zwitterionischen Tensiden, Polymertensiden und Mischungen daraus.

16. Verfahren gemäß Anspruch 15, wobei die Komponente e.) ausgewählt ist unter anionischen Tensiden, nicht-ionischen Tensiden und Mischungen daraus.

17. Verfahren gemäß Anspruch 16, wobei die Komponente e.) ausgewählt ist unter anionischen Tensiden.

18. Verfahren gemäß irgendeinem der Ansprüche 1 bis 17, wobei das Triazol-Fungizid ausgewählt ist unter Bitertanol, Bromuconazol, Cyproconazol, Diclobutrazol, Diniconazol, Epoxiconazol, Etaconazol, Fenbuconazol, Fluquinconazol, Flusilazol, Flutriafol, Hexaconazol, Myclobutanil, Penconazol, Propiconazol, Prothioconazol, Tebuconazol, Tetraconazol, Triadimefon, Triadimenol und Triticonazol.

19. Verfahren gemäß Anspruch 18, wobei das Triazol-Fungizid ausgewählt ist unter Flutriafol und Tebuconazol.

20. Verfahren gemäß irgendeinem der Ansprüche 1 bis 19, wobei die Pflanze oder der Samen, aus dem sich die Pflanze entwickelt, entweder ein Getreide oder eine breitblättrige Pflanze ist.

21. Verfahren gemäß Anspruch 20, wobei die Pflanze oder der Samen, aus dem sich die Pflanze entwickelt, ausgewählt ist aus Weizen, Gerste, Roggen, Gurken, Baumwolle, Sojabohnen, Gartenbohnen, Tomaten, Kartoffeln, Erdnüssen oder Kaffee.

22. Verfahren gemäß irgendeinem der Ansprüche 1 bis 21, wobei die flüssige Formulierung als eine Sprühbehandlung, eine Saatgutbehandlung oder eine Substratbehandlung verabreicht wird.

23. Verfahren gemäß Anspruch 22, wobei die flüssige Formulierung als eine Sprühbehandlung verabreicht wird.

24. Verfahren gemäß Anspruch 23, wobei die flüssige Formulierung in einer Menge verabreicht wird, um 1 bis 2000 Gramm Triazol-Fungizid pro Hektar zu liefern.

25. Verfahren gemäß Anspruch 24, wobei die flüssige Formulierung in einer Menge verabreicht wird, um 10 bis 1000 Gramm Triazol-Fungizid pro Hektar zu liefern.

## Revendications

1. Procédé pour la protection d'une plante, ou de ses semences, contre des champignons nuisibles, ladite plante étant sensible aux fongicides à base de triazole, comprenant l'étape consistant à appliquer sur la plante ou ses semences une formulation liquide, de préférence, sous forme diluée, dans lequel la formulation élaborée sous forme concentrée comprend :
a) un ou plusieurs principes actifs choisis parmi des fongicides à base de triazole
b) un ou plusieurs solvants choisis parmi des esters d'huiles végétales
c) un ou plusieurs co-solvants aprotiques polaires miscibles à l'eau
d) un ou plusieurs co-solvants non miscibles à l'eau
e) un système émulsionnant comprenant un ou plusieurs tensioactifs
f) éventuellement, d'autres agents auxiliaires, de sorte que les dommages phytotoxiques engendrés sur la plante, dus au fongicide à base de triazole, soient réduits ou éliminés lorsqu'ils sont appliqués en quantité efficace au plan fongicide.

2. Procédé selon la revendication 1, dans lequel la formulation comprend :
a) 50 à 600 g/l d'un ou de plusieurs principes actifs choisis parmi les fongicides à base de triazole
b) 100 à 600 g/l d'un ou de plusieurs solvants choisis parmi des esters d'huiles végétales
c) 50 à 400 g/l d'un ou de plusieurs co-solvants aprotiques polaires miscibles à l'eau
d) 50 à 300 g/l d'un ou de plusieurs co-solvants non miscibles à l'eau
e) 10 à 200 g/l d'un système émulsionnant comprenant un ou plusieurs tensioactifs
f) 0 à 300 g/l d'autres agents auxiliaires.

3. Procédé selon la revendication 2, dans lequel la formulation comprend :
a) 80 à 400 g/l d'un ou de plusieurs principes actifs choisis parmi des fongicides à base de triazole
b) 150 à 450 g/l d'un ou de plusieurs solvants choisis parmi des esters d'huiles végétales
c) 100 à 300 g/l d'un ou de plusieurs co-solvants aprotiques polaires miscibles à l'eau
d) 100 à 250 g/l d'un ou de plusieurs co-solvants non miscibles à l'eau
e) 50 à 150 g/l d'un système émulsionnant comprenant un ou plusieurs tensioactifs
f) 0 à 300 g/l d'autres agents auxiliaires.

4. Procédé selon l'une quelconque des revendications 1 à 3, dans lequel le composant b) est choisi parmi des esters d'alkyle et d'acides gras d'huiles végétales.

5. Procédé selon la revendication 4, dans lequel le composant b) est choisi parmi des esters méthyliques d'acides gras d'huiles végétales.

6. Procédé selon l'une quelconque des revendications 1 à 5, dans lequel le composant c) est choisi parmi la N-méthylpyrrolidone, le sulfoxyde de diméthyle, le 2-propanol, le tétrahydrofuranne, le carbonate de propylène, la gamma-butyrolactone, la cyclohexanone, le tétrahydrothiophène-1,1-dioxyde, la N-cyclohexyl-2-pyrrolidone et la tétraméthylurée.

7. Procédé selon l'une quelconque des revendications 1 à 6, dans lequel le composant d) est choisi parmi des hydrocarbures aromatiques, des cétones, des esters, des amides et des alcools.

8. Procédé selon la revendication 7, dans lequel le composant d) est choisi parmi des hydrocarbures aromatiques.

9. Procédé selon la revendication 7, dans lequel le composant d) est choisi parmi des solvants ou des mélanges de solvants présentant des paramètres de solubilité selon Hansen dans les plages δd de 14,3 à 17,9 MPa^{1/2}, δp de 0,4 à 10,0 MPa^{1/2} et δh de 1,0 à 13,7 MPa^{1/2}.

10. Procédé selon la revendication 9, dans lequel le composant d) est choisi parmi des solvants ou des mélanges de solvants présentant des paramètres de solubilité selon Hansen dans les plages δd de 14,4 à 17, MPa^{1/2}, δp de 2,0 à 8,0 MPa^{1/2} et δh de 7,0 à 13,6 MPa^{1/2}.

11. Procédé selon la revendication 10, dans lequel le composant d) est choisi parmi des alcools en C5-C10.

12. Procédé selon la revendication 11, dans lequel le composant d) est choisi parmi des alcools en C5-C9.

13. Procédé selon la revendication 12, dans lequel le composant d) est choisi parmi des alcools en C6-C9.

14. Procédé selon la revendication 13, dans lequel le composant d) est l'octanol.

15. Procédé selon l'une quelconque des revendications 1 à 14, dans lequel le composant e) est choisi parmi des tensioactifs anioniques, des tensioactifs non ioniques, des tensioactifs cationiques, des tensioactifs zwitterioniques, des tensioactifs polymères et des mélanges de ceux-ci.

16. Procédé selon la revendication 15, dans lequel le composant e) est choisi parmi des tensioactifs anioniques, des tensioactifs non ioniques et des mélanges de ceux-ci.

17. Procédé selon la revendication 16, dans lequel le composant e) est choisi parmi des tensioactifs anioniques.

18. Procédé selon l'une quelconque des revendications 1 à 17, dans lequel le fongicide à base de triazole est choisi parmi les composés bitertanol, bromuconazole, cyproconazole, diclobutrazole, diniconazole, époxyconazole, étaconazole, fenbuconazole, fluquinconazole, flusilazole, flutriafol, hexaconazole, myclobutanil, penconazole, propiconazole, prothioconazole, tébuconazole, tétraconazole, triadiméfon, triadiménol et triticonazole.

19. Procédé selon la revendication 18, dans lequel le fongicide à base de triazole est choisi parmi le flutriafol et le tébuconazole.

20. Procédé selon l'une quelconque des revendications 1 à 19, dans lequel la plante, ou les semences à partir desquelles la plante se développera, est/sont représentée(s) par une céréale ou par une plante à feuilles larges.

21. Procédé selon la revendication 20, dans lequel on choisit la plante, ou les semences à partir desquelles la plante se développera, parmi le blé, l'orge, le seigle, le concombre, le coton, les fèves de soja, les haricots communs, les tomates, les pommes de terre, les arachides ou le café.

22. Procédé selon l'une quelconque des revendications 1 à 21, dans lequel la formulation liquide est appliquée sous la forme d'un traitement de pulvérisation, d'un traitement des semences ou d'un traitement des sols.

23. Procédé selon la revendication 22, dans lequel la formulation liquide est appliquée sous la forme d'un traitement de pulvérisation.

24. Procédé selon la revendication 23, dans lequel la formulation liquide est appliquée en quantité permettant de délivrer 1 à 2000 grammes de fongicide à base de triazole par hectare.

25. Procédé selon la revendication 24, dans lequel la formulation liquide est appliquée en quantité permettant de délivrer 10 à 1000 grammes de fongicide à base de triazole par hectare.
